# EUROPEAN PATENT SPECIFICATION

(11) **EP 1 352 931 B1**
(45) Date of publication and mention of the grant of the patent: **19.03.2008**
(21) Application number: 03252014.0
(22) Date of filing: 31.03.2003
(51) Int. Cl.: C09D 5/00

(54) **Method of applying traffic marking onto an oily road surface and traffic paints formulated therefor**
Verfahren zum Auftragen von Verkehrsmarkierung auf eine ölige Strassenoberfläche und Strassenmarkierungszusammensetzungen dazu
Méthode pour appliquer un marquage routier sur la surface d'une route huileuse et compositions de signalisation routière à cet effet

(30) Priority: 10.04.2002 US 371312 P
(43) Date of publication of application: 15.10.2003
(73) Proprietor: ROHM AND HAAS COMPANY, Philadelphia, Pennsylvania 19106-2399 (US)
(72) Inventor: Hermes, Ann Robertson, Ambler, Pennsylvania 19002 (US); Schall, Donald Craig, Lansdale, Pennsylvania 19446 (US); Sobczak, Jeffrey Joseph, Coatesville, Pennsylvania 19320 (US)
(74) Representative: Kent, Venetia Katherine

(56) References cited:
- EP-A- 0 950 763
- EP-A- 0 960 919
- US-A- 5 820 993
- US-A- 5 939 514
- US-A- 6 013 721

## Description

This invention relates to a method of producing traffic markings which readily adheres to various substrates associated with roads and highways. More particularly, the method of the present invention is useful as a traffic paint which readily adheres to roadbeds that have an oily surface.

White and yellow traffic markings used for demarcating traffic lanes are a common sight on almost all roads. These markings provide the necessary guidance to ensure safe driving conditions under varying weather conditions. Within the context of traffic markings, the term "roads" is more expansive than merely streets and highways. "Roads" is used herein as a generic term and it includes any indoor or outdoor solid surface that is or may be exposed to pedestrians, moving vehicles, tractors or aircraft, either continuously, continually or intermittently. Some examples or "roads" include highways, streets, driveways, sidewalks, runways, taxiing areas, tarmac, parking lots and indoor floors (such as factory floors or floors inside shopping malls). The surface materials of "roads" may be masonry, asphalt, resins, concrete, cement, stone, stucco, tiles, wood, polymeric materials and any combinations thereof. Also, as used herein, "roads" embraces any surface of any substrate associated with roads, including, for example, signs, barricades, medial strips and traffic signal devices.

The majority of traffic markings, such as solid, transverse or interrupted stripes, are paint-based and traditionally include solvent-borne binders, these being predominantly alkyds and chlorinated rubber modified alkyds. However, since the early 1980's, environmentally safer paints based on water based solvent systems began to be employed. These waterborne traffic paints are primarily based on acrylic emulsions and produce dramatically lower volatile organic content ("VOC") emissions than traditional solvent-based traffic paint systems.

The application of traffic paints is inherently challenging because the substrate to which the paint is applied is very rarely of uniform consistency or "clean". Various foreign substances cover road surfaces either partially or completely. This is especially the case with respect to existing road surfaces which require periodic repainting of its traffic markings. Particularly problematic roads to paint are those where oil is present on the surface. These may result from deposits produced over a long period of time by heavy vehicular traffic or, from oil based materials which may make up the road bed itself. These oily materials may leach to the surface over time. Within the scope of this invention, "oily" or "oil contaminated" describes a road surface which may be either partially or completely covered with oily substances.

As for oil which might be externally deposited onto a road surface, it usually comes from oil or grease dropped from vehicles as they pass over the road surface. Over time, with many vehicles traveling over the same area of a road, these seemingly tiny droplets will add up to create a significant oily surface film. Further, as they age or if poorly maintained, many vehicle engines will burn increasingly more oil as part of the internal combustion process. This oil is vaporized and passes out the exhaust system. Once airborne, the vaporized oil will cool, condense and drop to the road surface, adding to any oily film already present.

One source of oil on road surfaces are "patches" which are used to cover holes or cracks in older roadbeds. Another source of oil are materials known as "sealers" which are used to resurface an entire roadbed. An example of such a material is commonly known as "chip seal", which consists of stone, rocks or sand mixed in or applied over a layer of asphalt or asphalt based emulsion products. In some instances, the stone chips are washed in kerosene or such similar solvent prior to application onto the roadbed. Residual amounts of these solvents on the stone chips will result in an even reduced potential for adhesion.

One attempt to address the issue of coating similar surfaces is disclosed in EP 0960919 B1. This patent utilizes low molecular weight, low Tg, hydrophobic polymers to aid in the adhesion of paints to roofs and other horizontal or vertical construction surfaces which have been coated with a mastic type material to inhibit the seepage of water into the structure to which they are applied. The problem with this method is that it requires the use of a tiecoat, or primer, before the application of the topcoat. While the tiecoat may consist of a formulation similar to that of the topcoat, it requires the presence of a multi-valent metal ion complex. The requirement of having to add another process step in the application of the paint and the addition of a metal ion into the formulation are unacceptable to traffic paint applicators. Since the application of traffic paints often causes congestion resulting from having to shut down traffic lanes or reroute traffic patterns, the less time spent applying the product, the better. Having to apply a tiecoat before the topcoat adds unacceptable time to the overall painting process. Further, the addition of metal ions into a generally outdoor paint opens up the possibility of exposing the surrounding environment to pollution caused by the leaching out of the toxic metal ion from the traffic paint over time.

The present invention solves the problem of making traffic paint adhere to an oily roadbed by providing a composition consisting of a polymer having a low Tg that is generated from a mixture of monomers, wherein from 10% to 99.9% of these monomers are hydrophobic. U.S. Patent No. 6,228,901 B discloses polymers having a higher Tg that are produced from a variety of monomers, at least some of which are hydrophobic, which impart improved wear resistance to traffic paint formulations. However, this patent does not address the issue of providing a traffic paint formulation which may be successfully applied to road surfaces which are covered with an oily film.

U.S. Patent No. 5,820,993 discloses a method of producing wear resistant traffic paint composition. In accordance with the method, a traffic marking of a traffic paint composition having low GPC number average molecular weight latex binder when applied to the road surface and exhibits improved wear resistance over those traffic paint compositions having high GPC number average molecular weight latex binders. The wear resistance is further enhanced by modifying the latex polymer used in the composition with acetoacetyl functional pendant moiety and amino silane.

U.S. Patent No. 5,939,514 discloses the preparation of water based coating compositions having extended storage stability. The composition includes separately stored polymeric binder component and a crosslinking component. These components are mixed prior to application over surfaces, such as, road surfaces. The polymeric binder component includes an anionically stabilized binder polymer having at least one reactive functional pendent moiety, or a blend of the binder polymer with a polyfunctional amine. The pot mix of the coating composition has extended storage stability and exhibit improved wear resistance on road surfaces in terms of paint remaining on the road longer than waterborne road marking paints based on the storage stable component alone.

EP 0,950, 514 discloses a method of producing traffic producing wear resistant traffic markings on road surfaces and to the traffic paint used therein. When a traffic paint containing a highly hydrophobic polymer, which is free from styrene is utilized, a wear resistant traffic marking is produced.

The present invention in its various aspects is as set out in the accompanying claims.

In accordance with the present invention, there is provided a method for improving the adhesion of traffic markers on a road surface comprising applying onto said road surface a layer of an aqueous traffic paint comprising a polymer having a molecular weight in the range from 1,000 to 200,000 and a Tg of from -10°C to 10°C, said polymer polymerized from a monomer mixture containing from 10% to 99.9%, by weight, based on the total weight of the polymer solids, hydrophobic monomers having a Hansch π value of at least 3.5 and selected from the group consisting of 2-ethylhexyl acrylate, butyl methacrylate, stearyl methacrylate, cetyliscosyl methacrylate, lauryl methacrylate, and vinyl aromatic monomers, and wherein said hydrophobic monomers include from 0.1 % to 50% by weight, based on the total weight of the polymer, of at least one of said vinyl aromatic monomers. The relationship between the Tg of the polymer and the hydrophobic monomer content of the polymer is such that, the hydrophobic monomer content may be as low as 10%, up to a maximum of 99.9%. However, when the Tg is on the high side of this range, that is, between 5°C and 25°C, the hydrophobic monomer content of the polymer must be at least 20% up to the maximum of 99.9%.

The amount of vinyl aromatic monomers is from 0.1 to 50%, based on the total weight of the polymer. If, however, only a low percentage of vinyl aromatic monomer is used, such as, for example, 5%, then other hydrophobic monomers must be present in an amount of at least 5% so that the minimum total percentage of hydrophobic monomer content is at least 10%.

The definitions of certain terms used herein is as follows.

"Polymer" means a dispersed, solubilized or a sequential polymer, as defined below.

"Dispersed polymer" means particles of polymer colloidally dispersed and stabilized in an aqueous medium.

"Solubilized polymer" includes "water soluble polymer", "water reducible polymer" or a mixture thereof. Water soluble polymer means a polymer dissolved in an aqueous medium. Water reducible polymer means a polymer dissolved in water and a water miscible organic solvent, such as, methanol, ethanol and glycol ethers. Solubilized polymer describes a polymer solution characterized by having the self-crowding constant (K) of the Mooney equation equal to zero. By contrast, a dispersed polymer has K equal to 1.9. The Mooney equation is described in detail in an article entitled "Physical Characterization of Water Dispersed and Soluble Acrylic Polymers" by Brendley et al., in "Nonpolluting Coatings and Coating Processes" published by Plenum Press, 1973, Gordon and Prane, ed.

"Sequential polymer" means a polymer which includes particles containing two or more polymeric phases, such as, for example, an inner phase, and an outer phase, wherein the outer phase is the predominant phase in contact with the aqueous medium in which the particle is dispersed. Some particles containing two or more polymeric phases include core/shell particles, core/shell particles with shell phases incompletely encapsulating the core or core/shell particles with a multiplicity of cores or interpenetrating network particles.

Sequential polymers may be prepared by conventional emulsion polymerization processes, preferably by well-known multi-stage emulsion polymerization, in which at least two stages differing in composition are formed in a sequential fashion. Such a process usually results in the creation of at least two mutually incompatible polymer compositions, thereby resulting in the formation of at least two phases. Each stage of the sequential polymer particles may contain chain transfer agents and surfactants, as well as other additives necessary to perform the polymerization reaction. U.S. Patent No. 4,814,373 may be consulted for further general and preferred details used for preparing sequential polymers by emulsion polymerization techniques.

"Tg" is the "glass transition temperature" of a polymer. The glass transition temperature is the temperature at which a polymer transitions from a rigid, glassy state at temperatures below its Tg to a fluid or rubbery state at temperatures above the Tg. The Tg of a polymer is typically measured by differential scanning calorimetry (DSC) using the mid-point in the heat flow versus temperature transition as the Tg value. A typical heating rate for the DSC measurement is 20°C/minute. The Tg of various homopolymers may be found, for example, in The Polymer Handbook, edited by J. Brandrup and E. H. Immergut, Interscience Publishers. The Tg of a polymer is calculated by using the Fox equation (T. G. Fox, Bull. Am. Physics Soc., Vol. 1, issue no. 3, page 123, 1956).

"(meth)acrylate" refers to either acrylate or methacrylate.

"Molecular weight" may be defined in several different ways. Synthetic polymers are almost always a mixture of many different molecular weights, i.e., there is a "molecular weight distribution", or "MWD". For a homopolymer, members of the distribution differ in the number of monomer units which they contain. This idea also extends to copolymers. Given that there is a distribution of molecular weights, the most complete characterization of the molecular weight of a given sample is the determination of the entire molecular weight distribution. This characterization is obtained by separating the members of the distribution and then quantitating the amount of each that is present. Once this distribution is at hand, there are several summary statistics, or moments, which can be generated from it to characterize the molecular weight of the polymer.

The two most common moments of the distribution are the "weight average molecular weight", "Mw", and the " number average molecular weight", "Mn". These are defined as follows:
Mw = Σ(Wimi)/ΣWi = Σ(NiMi2)/ΣNiMi
Mn = ΣWi/Σ(Wi/Mi) = Σ(NiMi)/ΣMi
where:
Mi = molar mass of the ith component of distribution
Wi = weight of the ith component of distribution
Ni = number of chains of the ith component
and the summations are over all the components in the distribution. Mw and Mn are typically computed from the MWD as measured by Gel Permeation Chromatography ("GPC").

"Hydrophobic monomer", as used herein, means a monomer having a Hansch π value of at least 3.5.

The hydrophobic monomers suitable for use in the present invention are monomers having a Hansch π value of at least 3.5 selected from the group consisting of 2-ethylhexyl acrylate, butyl methacrylate, stearyl methacrylate, cetyliscosyl methacrylate, lauryl methacrylate and vinyl aromatic monomers.

The vinyl aromatic monomers which may be utilized are preferably selected from styrene and various substituted styrenes. Exemplary substituent groups include 2-bromo, o-bromo, p-chloro, o-methoxy, p-methoxy and methyl. Many conventional traffic paints omit styrene monomers from their formulations because of styrene's known tendency to degrade when exposed to the UV radiation to which traffic paints are typically subjected. However, the inventors of the present subject matter have found that these monomers may be successfully employed to enhance the adhesive properties of the present invention on oily road surfaces.

In addition to the hydrophobic monomer(s) described above, the remainder of the monomer mixture may include at least one or more of the following hydrophilic monomers having a Hansch π value of less than 3.5. Some of these hydrophilic monomers include:
Methyl acrylate, ethyl acrylate, methyl methacrylate, hydroxyethyl (meth)acrylate and hydroxy propyl (meth) acrylate; (meth)acrylamide or substituted (meth) acrylamides, substituted with alpha-alkyl or aryl groups or N-alkyl or aryl groups; vinyl monomers, such as, for example, vinyl pyridine, N-vinyl pyrrolidone, acrylonitrile or methacrylonitrile. Additionally copolymerizable ethylenically-unsaturated acid monomers in the range of from 0.1% to 10%, by weight, based on the total weight of the polymer solids, of a acrylic acid, maleic acid, monomethyl itaconate, monomethyl fumarate, monobutyl fumarate, maleic anhydride, 2-acrylamido-2-methyl-1-propanesulfonic acid, sodium vinyl sulfonate, phosphoethyl methacrylate, and combinations thereof may be used.

The polymers used in the inventive composition have a Tg in the range of from -10°C to 10°C. Most preferred are polymers having a Tg of from -5°C to 5°C.

The polymers used in the present invention have a low molecular weight. As used herein, the term "low" identifies polymers having a weight average molecular weight ("Mw"), as measured by conventional GPC techniques, in the range of from 1000 to 200,000, most preferably in the range of 1000 to 100,000. The polymer of the inventive composition may be a dispersed polymer having polymer particles dispersed in an aqueous evaporable carrier or it may be either a water soluble polymer, a water reducible polymer, a mixture of the water soluble and water reducible polymers in the aqueous evaporable carrier, or a mixture of the dispersed, water reducible and water soluble polymers in the aqueous evaporable carrier.

In the practice of the present invention, it is necessary to maintain a correlation between the hydrophobic monomer content and the Tg of the polymer, in order to achieve the highest degree of adhesion possible to an oily roadbed. It has been discovered that if the Tg of the polymer is on the lower end of the range of from-25°C to 25°C, then less of the hydrophobic monomer(s) needs to be used. Polymers having glass dispersion values in this range require as little as 10% hydrophobic monomer content, up to a maximum of 99.9%. However, as the glass transition temperature of the polymer increases, such as in the range of from 5°C to 25°C, the hydrophobic monomer content must also increase. For polymers in this Tg range, especially on the high side of this range, at least 20% hydrophobic monomer content is required, up to a maximum of 99.9%.

The polymerization techniques which may be used for preparing the polymers of the present invention are well known in the art. The polymers may be prepared by aqueous solution polymerization or by emulsion polymerization. Emulsion polymerization is preferred. Either the thermal or redox initiation processes may be used. Polymers of alpha-beta ethylenically unsaturated monomers and their esters, especially the acrylic and methacrylic esters, are preferably prepared by processes described in "Emulsion Polymerization of Acrylic Monomers: May 1966", a publication of the Rohm and Haas Co., Phila. PA.

The polymerization process is typically initiated by conventional free radical initiators, such as, for example, hydrogen peroxide, benzoyl peroxide, t-butyl hydroperoxide, t-butyl peroctoate, ammonium and alkali persulfates, typically at a level of 0.05 to 3.0 percent by weight, based on the total weight of the monomer. Redox systems using the same initiators coupled with a suitable reductant such as, for example, sodium bisulfite may be used at similar levels.

It is necessary to limit the length of the polymer chain in order to achieve the objectives of this invention. Various methods are known in the art of polymerization for obtaining this result. Three of the most well known methods involve the control of the reaction temperature, the catalyst level or the amount and type of chain transfer agents. The use of chain transfer agents is preferred, although any other method capable of providing polymers of low molecular weight may be utilized. Suitable chain transfer agents include halo-organic compounds, such as carbon tetrabromide and dibromodichloromethane; sulfur containing compounds such as alkylthiols including ethanethiol, butanethiol, tert-butyl and ethyl mercaptoacetate, as well as aromatic thiols; or various other organic compounds having hydrogen atoms which are readily abstracted by free radicals during polymerization. Additional chain transfer agents include, but are not limited to, butyl mercaptopropionate, isooctyl mercaptopropionic acid, bromoform, carbon tetrachloride and alkyl mercaptans, such as, 1-dodecanthiol, t-dodecyl mercaptan and n-dodecyl mercaptan ("nDDM"). Mercaptans are preferred with nDDM being the most preferred.

A water reducible or water soluble polymer may be prepared directly in water if the monomer mix is water soluble. Alternatively, a water miscible solvent may be used, in which case water may be included in the polymerization mixture or is added after the polymerization process is complete. Water soluble or water reducible polymers produced this way may be blended together with dispersed polymers if so desired.

The drying time of the newly applied traffic paint may be accelerated in many ways. The paint may contain a polyfunctional amine together with an anionically stabilitzed latex and a volatile base. Examples of polyfunctional polyamines include p(OXEMA), p(vinylamine) and polyethyleneimine. Additionally, latexes containing pendant amine functionality, derived from a number of methods, including copolymerizing amine functional monomer into the latex polymer or subsequently reacting a latex polymer to yield amine groups attached to the latex polymer may be used to accelerate the drying of a traffic paint. When a polyfunctional amine is used it may be present in the paint or it may be added as a separate component before, during or after the paint is applied. US 5,804,627 provides additional information on the use of polyfunctional polyamines in traffic paint. US 5,922,398 provides additional information on the use of latex polymers containing pendant amine functionality.

Absorbers may be used to accelerate the drying of traffic markings. The absorbers should be able to absorb and/or adsorb small molecules like water, ammonia, C1-C6 alkylamines, C1-C6 alcohols, and mixtures thereof. Examples of absorbers include, but are not limited to, ion exchange resins, hollow sphere polymers, molecular sieves, organic super absorbing polymers, inorganic absorbents, porous and non-porous carbonaceous materials and mixtures thereof. US 5,947,632 provides additional information on the use of absorbers in traffic paint.

Drying of traffic paint may also be accelerated by contacting the paint with an acid during application of the paint. The acid may be in the form of an acid solution, an acid containing powder or glass beads coated with an acid. The acid may be applied to the paint or sprayed into a spray mist of the paint during the application of the paint. US 5,544,972 should be consulted for further details on this method. Any of the previously identified methods used to accelerate the drying of traffic paint may be combined as required by the application.

If desired and depending on the intended use of the traffic paint, additional components may be added to the composition. These additional components include, but are not limited to, thickeners; rheology modifiers; dyes; sequestering agents; biocides; dispersants; pigments, such as, for example, calcium carbonate, talc, clays, silicas and silicates; fillers, such as, for example, glass or polymeric microspheres, quartz and sand; anti-freeze agents; plasticizers; adhesion promoters; coalescing agents; wetting agents; waxes; surfactants; slip additives; defoamers; preservatives; corrosion inhibitors and anti-flocculants.

According to the method of the present invention, a layer of aqueous traffic paint is applied to the surface of an oily roadbed. The traffic paint may be applied using application techniques known in the art, such as, for example, by spraying onto the road surface by means such as truck mounted spray guns where the traffic paint is forced through a spray nozzle(s) from an air pressurized tank or by means of an airless pump. If desired, the traffic paint may be hand applied by means of a paint brush or paint roller. The wet thickness of the layer of aqueous traffic paint generally varies from 100 µm to 3000 µm, and is preferably from 350 µm to 1000 µm.

If desired, the method of the present invention may include dropping glass beads on the newly applied traffic paint before it is completely dry. The glass beads which adhere to the top of the traffic paint act as light reflectors. If glass beads are not used, the traffic markings would be difficult to see under night and wet weather conditions. As a result, nearly all traffic markings today contain some amount of glass beads, usually in the range of .72 to 2.9 kilograms per liter of paint. The application of glass beads may be by any conventional method, such as by dropping them at a selected rate out of a hopper which is positioned in close proximity to the traffic paint applicator. The glass beads are dropped onto the freshly applied traffic paint while the paint is still wet tacky. This allows the glass beads to adhere to the top surface of the traffic paint as it dries.

The following examples, including comparative examples, are provided to show the advantages of the claimed invention.

### EXAMPLES

### Example 1

To 900 g of deionized (DI) water under a nitrogen atmosphere at 90°C was added 6.3 g of ammonium bicarbonate dissolved in 50 g DI water, 7.8 g ammonium persulfate dissolved in 92 g DI water and 131 g polymer seed latex (solids content 42% average particle diameter of 60 nm) followed by 20 g of DI water to form a reaction mixture to which the following monomer mixture was then added over 3 hours at 85°C along with a solution of 5.2 g ammonium persulfate dissolved in 50 g DI.

| Monomer mixture: | in grams (g) |
|---|---|
| DI water | 625 |
| Surfactant * | 33.5 |
| butyl acrylate | 1200.0 |
| styrerie | 766.0 |
| acrylic acid | 34.0 |
| n-dodecylmercaptan | 20.0 |

| | |
|---|---|
| * Ethoxylated C6-C18 alkyl ether sulfate having 1 to 40 EO groups per molecule (30% active in water) | |

At the end of the polymerization, 0.01 g FeSO₄ in 9 g DI water, 0.01 g Versene® 220 in 9 g of DI water, 4.0 g t-butylhydroperoxide in 30 g DI water and 2.0 g isoascorbic acid in 30 g DI water were added at 60°C to the reaction product. Ammonium hydroxide was added to give a final pH =10. The resulting latex polymer had a solids content of 50.8% and an average particle diameter of 225 nm.

### Example 2 (COMPARATIVE)

To 750 g of deionized (DI) water under a nitrogen atmosphere at 90°C was added 6.4 g sodium carbonate dissolved in 70 g DI water, 6.4 g ammonium persulfate dissolved in 70 g DI water and 150 g polymer seed latex (solids content 42% average particle diameter of 60 nm) followed by 40 g of DI water to form a reaction mixture to which the following monomer mixture was then added over 3 hours at 85°C along with a solution of 4.2 g ammonium persulfate dissolved in 70 g DI.

| Monomer mixture: | in grams (g) |
|---|---|
| DI water | 750 |
| Surfactant * | 31.5 |
| Versene® 220(1.5% active) | 6.8 |
| butyl acrylate | 460 |
| methylmethacrylate | 814 |
| methacrylic acid | 26 |
| 2-ethylhexylacrylate | 700 |
| n-dodecylmercaptan | 20.0 |

| | |
|---|---|
| *Ethoxylated C6-C18 alkyl ether sulfate having 1 to 40 EO groups per molecule (30% active in water) | |

At the end of the polymerization, 0.01 g FeSO₄ in 9 g DI water, 0.01 g Versene® 220 in 1 g DI water, 1.8 g t-butylhydroperoxide in 20 g DI water and 0.6 g isoascorbic acid in 20 g DI water were added at 60°C to the reaction product. Ammonium hydroxide was added to give a final pH =9.8. To this was added 94 g of p(OXEMA)* (26.6% active). The resulting latex polymer had a solids content of 49.2% and an average particle diameter of 177 nm.
* p(OXEMA) is poly(oxazolidinoehtylmethacrylate). It may be prepared according to the procedure shown in EP 0950763A1.

### Example 3

To 800 g of deionized (DI) water under a nitrogen atmosphere at 88°C was added 6.4 g of sodium carbonate dissolved in 50 g DI water, 6.4 g ammonium persulfate dissolved in 50 g DI water and 64 g monomer mixture 4 followed by 20 g of DI water to form a reaction mixture to which the remaining monomer mixture was then added at 85°C along with a solution of 4.2 g ammonium persulfate dissolved in 75 g DI.

| Monomer mixture 4: | in grams (g) |
|---|---|
| DI water | 800 |
| Surfactant* | 31.5 |
| 2-ethylhexyl acrylate | 694 |
| Methylmethacrylate | 680 |
| Styrene | 200 |
| methacrylic acid | 26 |
| n-dodecylmercaptan | 20.0 |

| | |
|---|---|
| * Ethoxylated C6-C18 alkyl ether sulfate having 1 to 40 EO groups per molecule (30% active in water) | |

At the end of the polymerization, 0.01 g FeSO₄ in 9 g DI water, 1.8 g t-butylhydroperoxide in 20 g DI water and 0.6 g isoascorbic acid in 20 g DI water were added at 60°C to the reaction product. Ammonium hydroxide was added to give a final pH =10.1. To this was added 93 g of p(OXEMA) (26.6% active). The resulting latex polymer had a solids content of 49.6% and an average particle diameter of 190 nm.

### Example 4

To 800 g of deionized (DI) water under a nitrogen atmosphere at 88°C was added 6.4 g of sodium carbonate dissolved in 50 g DI water, 6.4 g ammonium persulfate dissolved in 50 g DI water and 64 g monomer mixture 5 followed by 20 g of DI water to form a reaction mixture to which the remaining monomer mixture was then added at 85°C along with a solution of 4.2 g ammonium persulfate dissolved in 75 g DI.

| Monomer mixture 5: | in grams (g) |
|---|---|
| DI water | 800 |
| Surfactant * | 31.5 |
| 2-ethylhexyl acrylate | 1000 |
| Methylmethacrylate | 774 |
| Styrene | 200 |
| methacrylic acid | 26 |
| n-dodecylmercaptan | 20.0 |

| | |
|---|---|
| * Ethoxylated C6-C18 alkyl ether sulfate having 1 to 40 EO groups per molecule (30% active in water) | |

At the end of the polymerization, 0.01 g FeSO₄ in 9 g DI water, 1.8 g t-butylhydroperoxide in 20 g DI water and 0.6 g isoascorbic acid in 20 g DI water were added at 60°C to the reaction product. Ammonium hydroxide was added to give a final pH =10.1. To this was added 93 g of p(OXEMA) (26.6% active). The resulting latex polymer had a solids content of 49.7% and an average particle diameter of 194 nm.

### Example 5

To 750 g of deionized (DI) water under a nitrogen atmosphere at 90°C was added 6.2 g ammonium persulfate dissolved in 70 g DI water and 160 g polymer seed latex (solids content 42% average particle diameter of 60 nm) followed by 20 g of DI water to form a reaction mixture to which the following monomer mixture was then added over 3 hours at 85°C along with a solution of 4.2 g ammonium persulfate dissolved in 70 g DI.

| Monomer mixture 6: | in grams (g) |
|---|---|
| DI water | 750 |
| Sodium lauryl sulfate (28%) | 31.5 |
| butyl acrylate | 1080 |
| styrene | 886 |
| acrylic acid | 34 |
| n-dodecylmercaptan | 20.0 |

At the end of the polymerization, 0.01 g FeSO₄ in 9 g DI water, 0.01 g Versene® 220 in 1 g DI water, 1.8 g t-butylhydroperoxide in 20 g DI water and 0.6 g isoascorbic acid in 20 g DI water were added at 60°C to the reaction product. Ammonium hydroxide was added to give a final pH =9.8. To this was added 94 g of p(OXEMA) (26.6% active). The resulting latex polymer had a solids content of 49.8% and an average particle diameter of 235 nm.

### Example 6 (COMPARATIVE)

To 750 g of deionized (DI) water under a nitrogen atmosphere at 90°C was added 10.8 g ammonium bicarbonate dissolved in 70 g DI water, 6.2 g ammonium persulfate dissolved in 70 g DI water and 160 g polymer seed latex (solids content 42% average particle diameter of 60 nm) followed by 20 g of DI water to form a reaction mixture to which the following monomer mixture was then added over 3 hours at 85°C along with a solution of 4.2 g ammonium persulfate dissolved in 50 g DI.

| Monomer mixture 7: | in grams (g) |
|---|---|
| DI water | 750 |
| Sodium lauryl sulfate (28%) | 31.5 |
| 2-ethylhexyl acrylate | 950 |
| Methylmethacrylate | 1024 |
| methacrylic acid | 26 |
| n-dodecylmercaptan | 20.0 |

At the end of the polymerization, 0.01 g FeSO₄ in 9 g DI water, 1.8 g t-butylhydroperoxide in 20 g DI water and 0.6 g isoascorbic acid in 20 g DI water were added at 60°C to the reaction product. Ammonium hydroxide was added to give a final pH =9.8. To this was added 94 g of p(OXEMA) (26.6% active). The resulting latex polymer had a solids content of 49.0% and an average particle diameter of 189 nm.

### Example 7

To 800 g of deionized (DI) water under a nitrogen atmosphere at 88°C was added 6.4 g of sodium carbonate dissolved in 50 g DI water, 6.4 g ammonium persulfate dissolved in 50 g DI water and 64 g monomer mixture 8 followed by 20 g of DI water to form a reaction mixture to which the remaining monomer mixture was then added at 85°C along with a solution of 4.2 g ammonium persulfate dissolved in 75 g DI

| Monomer mixture 8: | in grams (g) |
|---|---|
| DI water | 800 |
| Surfactant * | 31.5 |
| 2-ethylhexyl acrylate | 1000 |
| Methylmethacrylate | 674 |
| Styrene | 300 |
| methacrylic acid | 26 |
| n-dodecylmercaptan | 20.0 |

| | |
|---|---|
| * Ethoxylated C6-C18 alkyl ether sulfate having to 40 EO groups per molecule (30% active in water) | |

At the end of the polymerization, 0.01 g FeSO₄ in 9 g DI water, 1.8 g t-butylhydroperoxide in 20 g DI water and 0.6 g isoascorbic acid in 20 g DI water were added at 60°C to the reaction product. Ammonium hydroxide was added to give a final pH =10.1. To this was added 93 g of p(OXEMA) (26.6% active). The resulting latex polymer had a solids content of 49.7% and an average particle diameter of 183 nm.

### Comparative Example C 1

To 750 g of deionized (DI) water under a nitrogen atmosphere at 90°C was added 10.8 g ammonium bicarbonate dissolved in 70 g DI water, 6.2 g ammonium persulfate dissolved in 70 g DI water and 160 g polymer seed latex (solids content 42% average particle diameter of 60 nm) followed by 20 g of DI water to form a reaction mixture to which the following monomer mixture was then added over 3 hours at 85°C along with a solution of 4.2 g ammonium persulfate dissolved in 70 g DI.

| Monomer mixture: | in grams (g) |
|---|---|
| DI water | 750 |
| Sodium lauryl sulfate (28%) | 31.5 |
| Butyl acrylate | 1200 |
| Methylmethacrylate | 774 |
| methacrylic acid | 26 |
| n-dodecylmercaptan | 20.0 |

At the end of the polymerization, 0.01 g FeSO₄ in 9 g DI water, 1.8 g t-butylhydroperoxide in 20 g DI water and 0.6 g isoascorbic acid in 20 g DI water were added at 60°C to the reaction product. Ammonium hydroxide was added to give a final pH =9.7. To this was added 94 g of p(OXEMA) (26.6% active). The resulting latex polymer had a solids content of 49.8% and an average particle diameter of 191 nm.

### Comparative Example C2

To 750 g of deionized (DI) water under a nitrogen atmosphere at 90°C was added 10.8 g ammonium bicarbonate dissolved in 70 g DI water, 6.2 g ammonium persulfate dissolved in 70 g DI water and 160 g polymer seed latex (solids content 42% average particle diameter of 60 nm) followed by 20 g of DI water to form a reaction mixture to which the following monomer mixture was then added over 3 hours at 85°C along with a solution of 4.2 g ammonium persulfate dissolved in 50 g DI.

| Monomer mixture: | in grams (g) |
|---|---|
| DI water | 750 |
| Sodium lauryl sulfate (28%) | 31.5 |
| butyl acrylate | 1100 |
| Methylmethacrylate | 874 |
| methacrylic acid | 26 |
| n-dodecylmercaptan | 20.0 |

At the end of the polymerization, 0.01 g FeSO₄ in 9 g DI water, 1.8 g t-butylhydroperoxide in 20 g DI water and 0.6 g isoascorbic acid in 20 g DI water were added at 60°C to the reaction product. Ammonium hydroxide was added to give a final pH =9.8. To this was added 94 g of p(OXEMA) (26.6% active). The resulting latex polymer had a solids content of 50.9% and an average particle diameter of 191 nm.

### Comparative Example C3

To 900 g of deionized (DI) water under a nitrogen atmosphere at 90°C was added 6.3 g of ammonium bicarbonate dissolved in 50 g DI water, 7.8 g ammonium persulfate dissolved in 92 g DI water and 131 g polymer seed latex (solids content 42% average particle diameter of 60 nm) followed by 20 g of DI water to form a reaction mixture to which the following monomer mixture was then added over 3 hours at 85°C along with a solution of 5.2 g ammonium persulfate dissolved in 50 g DI.

| Monomer mixture: | in grams (g) |
|---|---|
| DI water | 625 |
| Surfactant * | 33.5 |
| butyl acrylate | 1200.0 |
| styrene | 766.0 |
| acrylic acid | 34.0 |

| | |
|---|---|
| *Ethoxylated C6-C18 alkyl ether sulfate having 1 to 40 EO groups per molecule (30% active in water) | |

At the end of the polymerization, 0.01 g FeSO₄ in 9 g DI water, 0.01 g Versene® 220 in 9 g of DI water, 4.0 g t-butylhydroperoxide in 30 g DI water and 2.0 g isoascorbic acid in 30 g DI water were added at 60°C to the reaction product. Ammonium hydroxide was added to give a final pH =10. The resulting latex polymer had a solids content of 50.8% and an average particle diameter of 174 nm.

### Comparative Example C4

Rhoplex Fastrack® 2706 commercially available from Rohm and Haas Company, Philadelphia, PA, U.S.A..

### Comparative Example C5

Rhoplex Fastrack® 3427 commercially available from Rohm and Haas Company, Philadelphia, PA, U.S.A.

### Comparative Example C6

To 900 g of deionized (DI) water under a nitrogen atmosphere at 90°C was added 6.4 g of ammonium bicarbonate dissolved in 34 g DI water, 5.3 g ammonium persulfate dissolved in 34 g DI water and 132 g polymer seed latex (solids content 42% average particle diameter of 60 nm) followed by 23 g of DI water to form a reaction mixture to which the following monomer mixture was then added over 3 hours at 85°C along with a solution of 7.9 g ammonium persulfate dissolved in 71 g DI.

| Monomer mixture: | in grams (g) |
|---|---|
| DI water | 608 |
| Surfactant * | 33.8 |
| butyl acrylate | 1014.0 |
| styrene | 975.0 |
| acrylic acid | 34.5 |

| | |
|---|---|
| *Ethoxylated C6-C18 alkyl ether sulfate having 1 to 40 EO groups per molecule (30% active in water) | |

At the end of the polymerization, 0.01 g FeSO₄ in 9 g DI water, 0.01 g Versene® 220 (available from Dow Chemical, Midland Michigan) in 9 g of DI water, 4.0 g t-butylhydroperoxide in 30 g DI water and 2.0 g isoascorbic acid in 30 g DI water were added at 60°C to the reaction product. Ammonium hydroxide was added to give a final pH =9.7. To this was added 126 g of p(OXEMA) (28.3% active). The resulting latex polymer had a solids content of 51.1 % and an average particle diameter of 231 nm.

**Table I**

| Polymer Characteristics According to the Invention | | | |
|---|---|---|---|
| Example | Percent Hydrophobic Monomer | %nDDM* | Tg |
| 1 | 38.3 | 1.0 | 0 |
| 2 (comp) | 35 | 1.0 | 0 |
| 3 | 44.7 | 1.0 | -2 |
| 4 | 60 | 1.0 | 3 |
| 5 | 44.3 | 1.0 | 10 |
| 6 (comp) | 47.5 | 1.0 | 10 |
| 7 | 65 | 1.0 | 8 |

| | | | |
|---|---|---|---|
| *nDDM: n-dodecyl mercaptan | | | |

**Table II**

| Polymer Characteristics Of The Comparative Examples | | | |
|---|---|---|---|
| Example | Percent Hydrophobic Monomer | %nDDM | Tg |
| C1 | 0 | 1.0 | 0 |
| C2 | 0 | 1.0 | 10 |
| C3 | 38.3 | 0 | 0 |
| C4 | 0 | 0 | 25 |
| C5 | 0 | * | 25 |
| C6 | 48.3 | 0 | 25 |

| | | | |
|---|---|---|---|
| * Low molecular weight within the range of the polymers of the invention | | | |

The above identified polymers were then added to paint formulations in order to show the increased oily road adhesion properties exhibited by the polymers of the present invention.

### Preparation of Traffic Paints

Traffic Paints 1 through 7 and Comparative Traffic Paints C1 through C6 were prepared according to the following formulations. The ingredients were added in the given order. The ingredients of Part I (A through I) were added sequentially under high shear agitation and then mixed for 15 minutes. Part II ingredients (J through O) were then added sequentially, at an agitation speed necessary to maintain a deep vortex. Once all ingredients were added, the formulation was mixed for 15 minutes at a viscosity of 80 to 85 KU (Krebs Units).

**TABLE III**

| Ingredients for Traffic Paints 1 -8 and C1 - C6 | | | | | | | | | | | | | | | |
|---|---|---|---|---|---|---|---|---|---|---|---|---|---|---|---|
| Pt | A | B | C | D | E | F | G | H | I | J | K | L | M | N | O |
| 1 | 403.8 | 30.0 | 13.3 | --- | 7.0 | 2.8 | 5.4 | 100 | 758.6 | 22.6 | 6.2 | 7.4 | 0.6 | -- | 36.8 |
| 2 (comp) | 463.6 | --- | -- | 7.3 | -- | 2.8 | 5.5 | 100 | 770.9 | 30.0 | 13.5 | 7.5 | --- | 5.1 | --- |
| 3 | 449.2 | --- | -- | 7.3 | -- | 2.8 | 5.5 | 100 | 770.9 | 30.0 | 13.4 | 7.4 | --- | 6.0 | 11.5 |
| 4 | 445.7 | 6.3 | --- | 7.3 | --- | 2.8 | 5.5 | 100 | 770.9 | 30.0 | 13.3 | 7.4 | --- | 7.0 | 7.0. |
| 5 | 433.3 | 9.0 | --- | --- | 7.2 | 2.8 | 5.5 | 100 | 770.9 | 30.0 | 13.0 | 3.8 | -- | --- | 19.6 |
| 6 (comp) | 460.6 | --- | --- | 7.2 | --- | 2.8 | 5.5 | 100 | 770.9 | 30.0 | 13.5 | 3.8 | --- | 11.2 | --- |
| 7 | 443.9 | --- | --- | 7.3 | --- | 2.8 | 5.5 | 100 | 770.9 | 30.0 | 13.2 | 7.4 | --- | 8.9 | 12.0 |
| | | | | | | | | | | | | | | | |
| C1 | 465.8 | --- | --- | 7.2 | --- | 2.8 | 5.5 | 100 | 770.9 | 30.0 | 13.7 | --- | 3.8 | 6.7 | 1.7 |
| C2 | 448.3 | --- | --- | 7.2 | --- | 2.8 | 5.5 | 100 | 770.9 | 30.0 | 13.7 | --- | 3.8 | 10.0 | 15.3 |
| C3 | 422.0 | --- | 14.1 | --- | 7.4 | 2.8 | 5.5 | 100 | 757.4 | 30.0 | 13.0 | --- | --- | --- | 36.1 |
| C4 | 460.1 | --- | --- | 7.2 | --- | 2.8 | 2.0 | 100 | 760.6 | 30.0 | 23.0 | 3.5 | --- | 7.0 | 11.6 |
| C5 | 455.5 | --- | --- | 5.0 | --- | 2.8 | 3.0 | 100 | 760.3 | 30.0 | 23.0 | 2.5 | --- | 12.0 | 12.0 |
| C6 | 424 | .1 38.0 | --- | --- | 8.5 | 2.8 | 5.5 | 100 | 760.3 | 30.0 | 17.3 | --- | --- | --- | 23.3 |

Unless stated otherwise, the following ingredients were used in the formulation of the paints identified hereinabove. All weights are shown in grams.
- A: means the polymers made previously using the same numbers as for the paints.
- B: means water.
- C: means p(OXEMA), defined hereinabove.
- D: means Tamol® 901 dispersant, supplied by the Rohm and Haas Co., Phila. PA.
- E: means Colloid® 226/35 dispersant, supplied by Rhodia, Inc., Cranbury, N.J.
- F: means Surfonyl® CT-136 surfactant, supplied by Air Products, Inc. Allentown, PA.
- G: means Drewplus® L-493 defoamer, supplied by Drew Chemical Co., Boonton, N.J.
- H: means TiPure® R-900 titanium dioxide supplied by E.I.duPont de Nemours & Co., Wilmington, DE.
- I: means Omyacarb®5, ground natural calcium carbonate, supplied by Omya, Inc., Proctor, VT.
- J: means methanol.
- K: means Texanol®, an ester alcohol supplied by Eastman Chemicals, Kingsport, TN.
- L: means benzophenone (30% in methanol).
- M: means Acrysol® SCT-275, a rheology modifier supplied by Rohm and Haas Co., Phila., PA.
- N: means Natrasol® 250 HR supplied by Aqualon, Inc., Wilmington, DE.
- O: means water.

### Adhesion Tests

The following tests were performed to show the improved adhesive properties of the traffic paints formulated according to the invention.

**Oil Patch Adhesion:** Using a standard commercial grade automotive motor oil, a 15cmx30cm, (6" x 12") oil patch is brushed onto the surface of a test section of a concrete based road surface. After waiting for approximately 1 hour, the traffic paint to be tested is applied by spraying it as a line positioned transverse to the direction of traffic flow. The test lane is then opened up for traffic approximately 1 hour after paint application. At selected time intervals (typically from 1 to 6 weeks), the paints are evaluated for adhesion loss by being rated on a scale of from 0 to 10, with 10 representing no loss of adhesion, 0 representing total loss of adhesion and the values in between used to indicate varying degrees of adhesion loss.

**Cross-Hatch Adhesion:** 15cmx30cm (6" x 12")x 1 concrete blocks are formed by curing Portland Type I cement in polypropylene molds. The blocks are allowed to cure for a minimum of 1 month. Onto the smooth facing of each test block is applied approximately 3 grams of a standard commercial grade automotive motor oil, then rubbing evenly to apply a uniform film. After 24 hours, the test paint to be evaluated is applied onto the oily surface by using a 10 mil drawdown bar, thus forming a 7 mil wet film. After the paint is allowed to dry for 24 hours, a razor is used to scribe a grid pattern of 100 squares, each of which approximately 2mm by 2mm in size. The tacky surface of a conventional adhesive tape is securely applied onto the 100 square grid pattern by rubbing the back surface to the tape with an eraser for 10 seconds. The tape is then removed from the paint film by rapidly pulling it at approximately a 45° angle. By counting the number of squares still adhering to the oily concrete surface, the degree of adhesion of the traffic paint being tested is determined and is recorded as "% Adhered

**Table IV**

| Examples According to the Invention | | | |
|---|---|---|---|
| | Oil Patch Adhesion* | | Oily Concrete Cross-Hatch Adhesion |
| Example | 2 weeks | 6 weeks | % Adhered |
| 1 | 10 | 10 | 95 |
| 2 (comp) | - | - | 80 |
| 3 | 10 | 10 | 80 |
| 4 | 10 | 10 | 85 |
| 5 | - | - | 95 |
| 6 (comp) | 8 | 5 | 70 |
| 7 | 10 | 10 | 100 |

| | | | |
|---|---|---|---|
| Note: (*) - Testing was conducted on Rte. 202S in Southeastern Pennsylvania. | | | |

**Table V**

| Comparative Examples | | | |
|---|---|---|---|
| | Oil Patch Adhesion* | | Oily Concrete X-Hatch Adhesion |
| Example | 2 weeks | 6 weeks | % adhered |
| C1 | 5 | 2 | 15 |
| C2 | 4 | 0 | 20 |
| C3 | 6 | 2 | 35 |
| C4 | 0 | 0 | 0 |
| C5 | 4 | 1 | 0 |
| C6 | 5 | 1 | 10 |

| | | | |
|---|---|---|---|
| Note: (*) - Testing was conducted on Rte 202S in Southeastern Pennsylvania. | | | |

The above examples show the improvements observed in the adhesiveness of traffic paints using polymers created according to the invention. As can be seen from Table IV, low molecular weight, low Tg polymers having a significant hydrophobic monomer content exhibited superior adhesion when the paints into which they were formulated were applied to oily surfaces. In contrast, those polymers not produced according to the method of the present invention yielded poor adhesive characteristics. Comparative examples C1 and C2 show that polymers produced without any hydrophobic content failed to adhere at all to oily surfaces. Comparative examples C3 and C6 consisted of large molecular weight polymers which also failed to adhere to such surfaces. While Comparative examples C4 and C5 both did not contain any hydrophobic monomer content, modulating the molecular weight (high Mw in C4 vs. low Mw in C5) failed to significantly affect performance.

It is evident that only when polymers are produced having each of the three physical properties within the scope of the present invention that traffic paint which includes these polymers readily adheres to road bed surfaces no matter whether these surfaces may be partially or completely covered with oily substances.

## Claims

1. A method for improving the adhesion of traffic markers on a road surface comprising applying onto said road surface a layer of an aqueous traffic paint comprising a polymer having a molecular weight in the range from 1,000 to 200,000 and a Tg of from -10°C to 10°C, said polymer being polymerized from a monomer mixture containing from 10% to 99.9%, by weight, based on the total weight of the polymer solids, hydrophobic monomers having a Hansch π value of at least 3.5 and selected from the group consisting of 2-ethylhexyl acrylate, butyl methacrylate, stearyl methacrylate, cetyliscosyl methacrylate, lauryl methacrylate, and vinyl aromatic monomers, and wherein said hydrophobic monomers include from 0.1% to 50% by weight, based on the total weight of the polymer, of at least one of said vinyl aromatic monomers.

2. The method of claim 1 further comprising contacting said layer with a drying agent.

## Patentansprüche

1. Verfahren zur Verbesserung der Haftung von Fahrbahnmarkierungen auf einer Straßenoberfläche, umfassend das Aufbringen einer Schicht eines wäßrigen Verkehrsanstrichs, umfassend ein Polymer mit einem Molekulargewicht in dem Bereich von 1.000 bis 200.000 und einer Tg von -10°C bis 10°C, auf die Straßenoberfläche, wobei das Polymer aus einem Monomergemisch polymerisiert worden ist, enthaltend von 10 Gew.-% bis 99,9 Gew.-%, bezogen auf das Gesamtgewicht der Polymerfeststoffe, hydrophobe Monomere mit einem Hansch π-Wert von mindestens 3,5 und ausgewählt aus der Gruppe, bestehend aus 2-Ethylhexylacrylat, Butylmethacrylat, Stearylmethacrylat, Cetylisocosylmethacrylat, Laurylmethacrylat und vinylaromatischen Monomeren, und wobei die hydrophoben Monomere von 0,1 bis 50 Gew.-%, bezogen auf das Gesamtgewicht des Polymers, von mindestens einem der vinylaromatischen Monomere einschließen.

2. Verfahren gemäß Anspruch 1, weiter umfassend das Inkontaktbringen der Schicht mit einem Trockenmittel.

## Revendications

1. Procédé pour améliorer l'adhérence de marquages routiers sur une surface de route comprenant l'application sur ladite surface de route d'une couche d'une peinture aqueuse pour le marquage routier comprenant un polymère ayant un poids moléculaire dans l'intervalle de 1000 à 200 000 et une Tg de -10°C à 10°C, ledit polymère étant polymérisé à partir d'un mélange de monomères contenant de 10 % à 99,9 % en poids, rapporté au poids total des matières solides polymères, de monomères hydrophobes présentant une valeur Hansch π d'au moins 3,5 et choisis parmi l'acrylate de 2-éthylhexyle, le méthacrylate de butyle, le méthacrylate de stéaryle, le méthacrylate de cétyliscosyle, le méthacrylate de lauryle, et des monomères aromatiques vinyliques, et dans lequel lesdits monomères hydrophobes comprennent de 0,1 % à 50 % en poids, rapporté au poids total du polymère, d'au moins un desdits monomères aromatiques vinyliques.

2. Procédé selon la revendication 1 comprenant de plus la mise en contact de ladite couche avec un agent séchant.
